# EUROPÄISCHE PATENTSCHRIFT

(11) **EP 2 992 159 B1**
(45) Veröffentlichungstag und Bekanntmachung des Hinweises auf die Patenterteilung: **04.12.2019**
(21) Anmeldenummer: 14718034.3
(22) Anmeldetag: 10.04.2014
(51) Int. Cl.: E06B 5/11, F03D 13/00, E06B 1/60, E06B 3/263, E06B 3/68, E06B 3/70, F03D 80/00, F03D 13/20, F03D 80/50

(54) **WINDENERGIEANLAGE UND WINDENERGIEANLAGEN- TURM**
WIND TURBINE AND WIND TURBINE TOWER
ÉOLIENNE ET TOUR D'ÉOLIENNE

(30) Priorität: 30.04.2013 DE 102013207908
(43) Veröffentlichungstag der Anmeldung: 09.03.2016
(73) Patentinhaber: Wobben Properties GmbH, 26607 Aurich (DE)
(72) Erfinder: POLLMANN, Frank, 22391 Hamburg (DE); KERSTEN, Roy, 39291 Hohenwarthe (DE); MEDOCH, Stefan, 39124 Magdeburg (DE)
(74) Vertreter: Eisenführ Speiser
(86) Internationale Anmeldenummer: PCT/EP2014/057303
(87) Internationale Veröffentlichungsnummer: WO 2014/177357

(56) Entgegenhaltungen:
- AT-U1- 6 967
- BE-A1- 899 889
- CN-U- 201 786 578
- FR-A1- 2 588 606
- GB-A- 2 185 056

## Beschreibung

Die vorliegende Erfindung betrifft eine Windenergieanlage und einen Windenergieanlagen-Turm.

Windenergieanlagen weisen typischerweise einen Turm und eine Zugangstür im unteren Bereich des Turmes auf. Die Tür dient dazu, dass Service- und Wartungspersonal die Windenergieanlage betreten kann während nicht-autorisierte Personen vom Zutritt abgehalten werden sollen.

Daher ist es wichtig, dass die Zugangstür so ausgestaltet ist, dass nicht-autorisierte Personen keinen Zutritt zu der Windenergieanlage erhalten können. In letzter Zeit ist es vorgekommen, dass Diebe sich Zutritt zu Windenergieanlagen verschafft haben, um Metall zu klauen.

In der prioritätsbegründenden deutschen Patentanmeldung hat das Deutsche Patent- und Markenamt die folgenden Dokumente recherchiert: DE 28 37 805 A1; DE 10 2007 016 756 A1; AT 006 967 U1; FR 2 588 606 A1; GB 2 185 056 A und EP 1 873 337 A2.

Es ist daher eine Aufgabe der vorliegenden Erfindung, eine Windenergieanlage und einen Windenergieanlagen-Turm mit einer verbesserten Zugangstür vorzusehen.

Diese Aufgabe wird durch eine Windenergieanlage nach Anspruch 1 und einen Windenergieanlagen-Turm nach Anspruch 6 gelöst.

Somit wird eine Windenergieanlage mit einem Turm mit einer Zugangstür vorgesehen. Die Zugangstür weist ein Türschloss und an ihrer Außenseite ein Prellblech auf, welches sich im Wesentlichen über die gesamte Fläche der Tür erstreckt und eine Ausnehmung aufweist. Im Bereich der Ausnehmung ist ein Türknauf vorgesehen. Eine Außenseite des Prellblechs ragt zumindest teilweise über das Türschloss nach außen hinaus.

Gemäß einem Aspekt der vorliegenden Erfindung weist die Zugangstür an ihrer Innenseite ein Gitter bestehend aus vertikalen und horizontalen Streben auf.

Gemäß einem weiteren Aspekt der vorliegenden Erfindung ist ein Abstand zwischen benachbarten horizontalen oder zwischen benachbarten vertikalen Streben ≤60 cm und insbesondere ≤30 cm.

Gemäß einem weiteren Aspekt der vorliegenden Erfindung ist ein Lochblech zwischen der Gitterstruktur und dem Prellblech vorgesehen.

Gemäß einem weiteren Aspekt der vorliegenden Erfindung ist die Zugangstür über Klemmbleche an einer Turmwandung befestigt.

Die Erfindung betrifft ebenfalls einen Windenergieanlagen-Turm mit einer Zugangstür, wobei die Zugangstür ein Türschloss und an ihrer Außenseite ein Prellblech aufweist, welches sich im Wesentlichen über die gesamte Fläche der Tür erstreckt und eine Ausnehmung aufweist. Im Bereich der Ausnehmung ist ein Türknauf vorgesehen. Eine Außenseite des Prellblechs ragt zumindest teilweise über das Türschloss nach außen hinaus.

Gemäß der Erfindung erfüllt die Zugangstür mindestens DIN EN ISO 1627: 2011-09 und weist die Widerstandsklasse 4 auf.

Die Erfindung betrifft einen Gedanken, eine Zugangstür für einen Windenergieanlagen-Turm vorzusehen, welcher über eine höhere Einbruchssicherheit verfügt. Dazu kann an der Außenseite der Tür eine Prellplatte vorgesehen sein. Die Prellplatte weist im Bereich des Schlosses und des Türknaufs eine Ausnehmung auf. Der Türrahmen kann mittels Klemmblechen an der Turmwandung befestigt werden. An der Innenseite der Tür sind horizontale und vertikale Verstrebungen vorgesehen, welche zusammen eine Gitterstruktur ausbilden. Der Abstand zwischen benachbarten Streben ist vorzugsweise ≤60 cm.

Optional können die Türzargen außen vorgesehen sein. Derartige Türzargen bestehen aus einem gehärteten Material.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer erfindungsgemäßen Windenergieanlage,
- Fig. 2: zeigt eine schematische Darstellung einer Außenseite einer Zugangstür gemäß einem ersten Ausführungsbeispiel,
- Fig. 3: zeigt eine schematische Darstellung einer Innenseite einer Zugangstür gemäß dem ersten Ausführungsbeispiel und
- Fig. 4: zeigt eine Schnittansicht entlang des Schnitts A-A von Fig. 2.

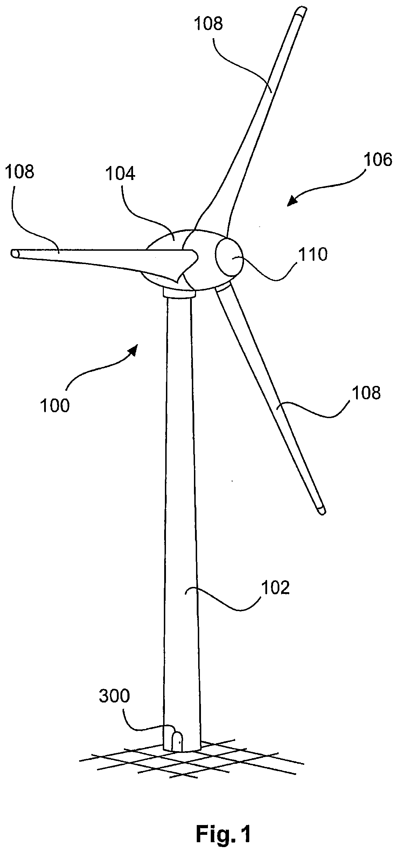

Fig. 1 zeigt eine schematische Darstellung einer erfindungsgemäßen Windenergieanlage gemäß der Erfindung. Die Windenergieanlage 100 weist einen Turm 102 und eine Gondel 104 auf. An der Gondel 104 ist ein Rotor 106 mit drei Rotorblättern 108 und einem Spinner 110 vorgesehen. Der Rotor 106 wird im Betrieb durch den Wind in eine Drehbewegung versetzt. Ein Generator ist direkt oder indirekt mit dem Rotor verbunden, so dass eine Drehbewegung des Rotors zu einer Drehbewegung des elektrischen Generators führt, der dann eine elektrische Leistung erzeugt. Der Pitch bzw. der Anstellwinkel der Rotorblätter 108 kann durch Pitchmotoren an den Rotorblattwurzeln der jeweiligen Rotorblätter verändert werden. Im unteren Bereich des Turms 102 der Windenergieanlage ist eine Zugangstür 300 vorgesehen. Diese Zugangstür 300 ist erfindungsgemäß mit einem verbesserten Einbruchsschutz ausgestattet.

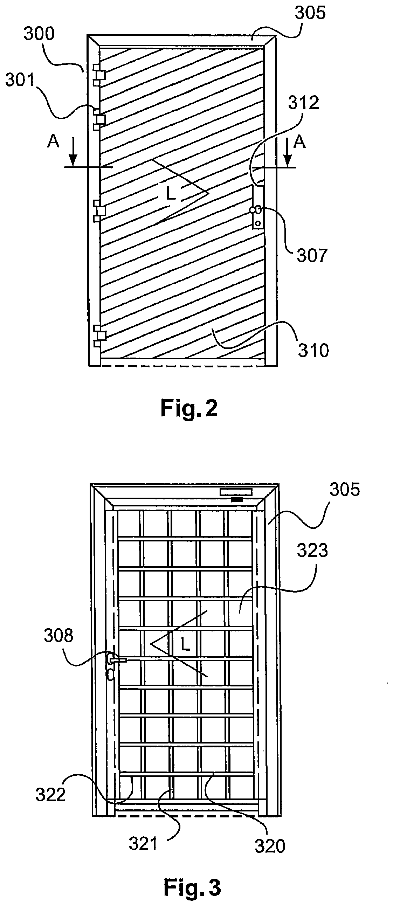

Fig. 2 zeigt eine schematische Ansicht einer Außenseite einer Zugangstür für eine Windenergieanlage gemäß einem ersten Ausführungsbeispiel. Die Zugangstür 300 weist eine Zarge 305 und Türbänder 301 auf, mittels welcher die Tür geöffnet werden kann. An der Außenseite der Tür ist eine Prellplatte 310 vorgesehen. Die Prellplatte 310 weist im Bereich des Türknaufs 307 eine Ausnehmung 312 auf. Damit wird erreicht, dass der Bereich des Türknaufs 307 und des Türschlosses gegenüber der Prellplatte 310 zurückgesetzt ist. Somit kann verhindert werden, dass ein Einbrecher z.B. ein Brecheisen oder dergleichen wirkungsvoll einsetzen kann.

Fig. 3 zeigt eine schematische Darstellung einer Innenseite einer Zugangstür einer Windenergieanlage gemäß dem ersten Ausführungsbeispiel. Die Zugangstür weist eine Zarge 305 sowie vertikale und horizontale Streben 320, 321, 322 auf. Die vertikalen und horizontalen Streben 321, 322 bilden eine Gitterstruktur. Der Abstand zwischen benachbarten horizontalen und/oder vertikalen Streben ist ≤60 cm und insbesondere ≤30 cm. Optional kann ein Lochblech 323 hinter der Gitterstruktur 320 d.h. zwischen der Gitterstruktur 320 und der Prellplatte 310 vorgesehen sein. Die Tür weist an der Innenseite einen Türgriff 308 auf.

Durch die Gitterstruktur 320 an der Innenseite der Zugangstür 300 kann sichergestellt werden, dass selbst wenn die Prellplatte 310 entfernt worden ist, ein Zugang in die Windenergieanlage effektiv verhindert werden kann.

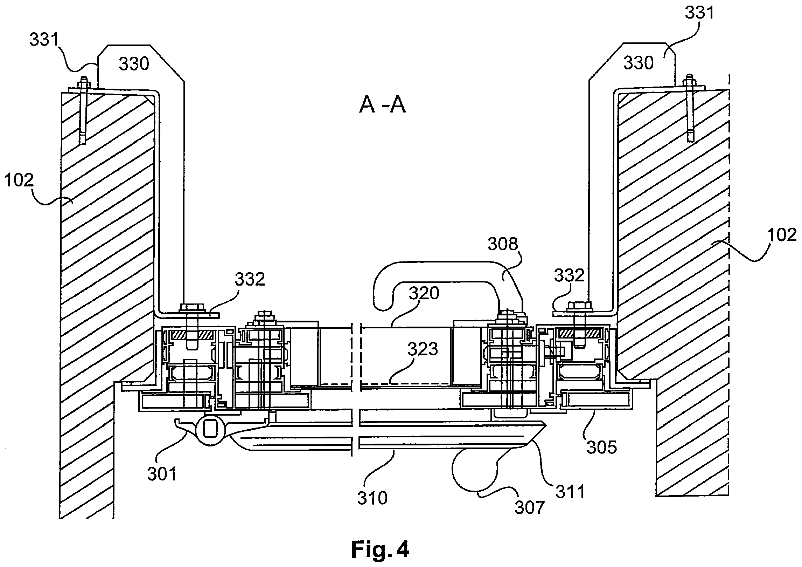

Fig. 4 zeigt eine Schnittansicht entlang des Schnitts A-A von Fig. 2. Die Zugangstür 300 ist mittels Klemmblechen 330 an der Wandung 102 des Turmes befestigt. Die Klemmbleche 330 weisen ein erstes Ende 331, das an der Wandung 102 des Turmes z.B. mittels Schrauben befestigt wird, und ein zweites Ende 332, das z.B. mittels Schrauben an einer Zarge 305 der Tür befestigt wird, auf. Die Tür weist an ihrer Außenseite eine Prellplatte 310 auf, welche an ihren Enden 311 abgeschrägt ausgestaltet ist. An der Innenseite der Tür ist eine Gitterstruktur 320 bestehend aus vertikalen und horizontalen Streben 321, 322 vorgesehen. Die Streben können z.B. miteinander verschweißt werden.

An der Innenseite kann ein Türgriff 308 und an der Außenseite kann ein Türknauf 307 vorgesehen sein. Die Prellplatte 310 ragt vorzugsweise zumindest teilweise über den Türknauf 307 hinaus. Der Türknauf 307 sowie ein Schloss im Bereich einer Ausnehmung 312 der Prellplatte 310 vorgesehen sein.

Die Tür 300 kann mittels Türbändern 301 an einer Türzarge 305 befestigt sein.

Gemäß der Erfindung kann die Prellplatte 310 von innen verschraubt sein.

Optional können in der Tür oder oberhalb des Türrahmens Löcher vorgesehen sein, um eine passive Belüftung des Turminneren vorzusehen.

Vorzugsweise ist der Abstand zwischen benachbarten vertikalen oder horizontalen Streben 321, 322 ≤30 cm.

Optional kann in den vertikalen und/oder horizontalen Streben 321, 322 lose gelagertes Rundmaterial vorgesehen sein, was ein Durchsägen der Gitterstäbe verhindern kann.

Das Lochgitter 323 dient als Einbruchshinderung.

## Patentansprüche

1. Windenergieanlage, mit
einem Turm (102), der eine Zugangstür (300) aufweist,
**dadurch gekennzeichnet, dass** die Zugangstür (300) ein Türschloss und an einer Außenseite ein Prellblech (310) aufweist, welches sich im Wesentlichen über die gesamte Fläche der Zugangstür (300) erstreckt und eine Ausnehmung (312) aufweist,
wobei im Bereich der Ausnehmung (312) ein Türknauf (307) vorgesehen ist,
wobei eine Außenseite des Prellblechs (310) zumindest teilweise über das Türschloss nach außen hinausragt,
wobei die Zugangstür (300) an einer Innenseite ein Gitter bestehend aus vertikalen und horizontalen Streben (321, 322; 320) aufweist.

2. Windenergieanlage nach Anspruch 1, wobei
ein Abstand zwischen benachbarten horizontalen Streben (322) oder zwischen benachbarten vertikalen Streben (321) ≤ 60 cm und insbesondere ≤ 30 cm ist.

3. Windenergieanlage nach einem der Ansprüche 1 oder 2, wobei
ein Lochblech (323) zwischen der Gitterstruktur (320) und dem Prellblech (310) vorgesehen ist.

4. Windenergieanlage nach einem der Ansprüche 1 bis 3, wobei
die Zugangstür (300) über Klemmbleche (330) an einer Turmwandung befestigt ist.

## Claims

1. Wind turbine, comprising
a tower (102) which has an access door (300),
**characterized in that** the access door (300) has a door lock and, on an outer side, a baffle plate (310) which extends substantially over the entire surface of the access door (300) and has a recess (312),
wherein a doorknob (307) is provided in the region of the recess (312),
wherein an outer side of the baffle plate (310) at least partially projects outwards beyond the door lock,
wherein the access door (300) has, on an inner side, a grid consisting of vertical and horizontal struts (321, 322; 320).

2. Wind turbine according to Claim 1, wherein
a distance between adjacent horizontal struts (322) or between adjacent vertical struts (321) is ≤ 60 cm and, in particular, ≤ 30 cm.

3. Wind turbine according to one of Claims 1 or 2, wherein
a perforated plate (323) is provided between the grid structure (320) and the baffle plate (310).

4. Wind turbine according to one of Claims 1 to 3, wherein
the access door (300) is fastened to a tower wall via clamping plates (330).

## Revendications

1. Éolienne, avec
une tour (102), qui présente une porte d'accès (300),
**caractérisée en ce que** la porte d'accès (300) présente une serrure de porte et au niveau d'un côté extérieur un déflecteur (310), lequel s'étend sensiblement sur toute la surface de la porte d'accès (300) et présente un évidement (312),
dans laquelle une poignée de porte (307) est prévue dans la zone de l'évidement (312),
dans laquelle un côté extérieur du déflecteur (310) fait saillie vers l'extérieur au moins en partie de la serrure de porte,
dans laquelle la porte d'accès (300) présente au niveau d'un côté intérieur une grille constituée d'entretoises verticales et horizontales (321, 322 ; 320).

2. Éolienne selon la revendication 1, dans laquelle
une distance entre des entretoises horizontales adjacentes (322) ou entre des entretoises verticales adjacentes (321) est ≤ 60 cm et en particulier ≤ 30 cm.

3. Éolienne selon l'une quelconque des revendications 1 ou 2, dans laquelle
une tôle perforée (323) est prévue entre la structure de grille (320) et le déflecteur (310).

4. Éolienne selon l'une quelconque des revendications 1 à 3, dans laquelle
la porte d'accès (300) est fixée à une paroi de tour par le biais de tôles de serrage (330).
